# EUROPEAN PATENT SPECIFICATION

(11) **EP 3 233 451 B1**
(45) Date of publication and mention of the grant of the patent: **31.07.2019**
(21) Application number: 14833471.7
(22) Date of filing: 18.12.2014
(51) Int. Cl.: F16L 11/112, B29D 23/00, B29C 48/153

(54) **METHOD, MANUFACTURING LINE AND WORKING STATION FOR CONTINUOUSLY MANUFACTURING A REINFORCED FLEXIBLE HOSE, AND HOSE MANUFACTURED THEREBY**
VERFAHREN, FERTIGUNGSSTRASSE UND ARBEITSSTATION ZUR KONTINUIERLICHEN HERSTELLUNG EINES VERSTÄRKTEN SCHLAUCHS UND DAMIT HERGESTELLTER SCHLAUCH
PROCÉDÉ, LIGNE DE FABRICATION ET POSTE DE TRAVAIL POUR LA FABRICATION CONTINUE D'UN TUYAU SOUPLE RENFORCÉ, ET TUYAU AINSI FABRIQUÉ

(43) Date of publication of application: 25.10.2017
(73) Proprietor: Mayenne SP. ZO.O., 07-100 Wegrów (PL)
(72) Inventor: GIUSTO, Stefano, I-36100 Vicenza (IT); VIGOLO, Valentino, I-36030 Caldogno (VI) (IT)
(74) Representative: Autuori, Angelo
(86) International application number: PCT/IB2014/067091
(87) International publication number: WO 2016/097823

(56) References cited:
- CA-A1- 1 054 535
- GB-A- 863 303
- KR-A- 20010 008 165
- US-A- 3 349 806
- US-A- 3 872 893
- US-A1- 2013 180 615

## Description

### Field of the invention

The present invention relates to the art of hose manufacturing, and particularly relates to a method and a production line for continuously manufacturing reinforced flexible hoses.

Moreover, the present invention relates to a hose manufactured by means of the above method and/or production line.

### Background of the invention

It is known that flexible hoses, such as garden hoses, are manufactured by a production line which basically includes a starting extruding station to extrude an inner layer, a braiding or knitting station to braid or knit a textile reinforcing layer onto the outer surface of the inner layer to form a semifinished hose and a final extruding station to extrude a cover layer.

The documents PL178431B1, PL397958A1, PL65373Y1, US4175992, GB1202094 and CA1054535 show hoses manufactured in this manner.

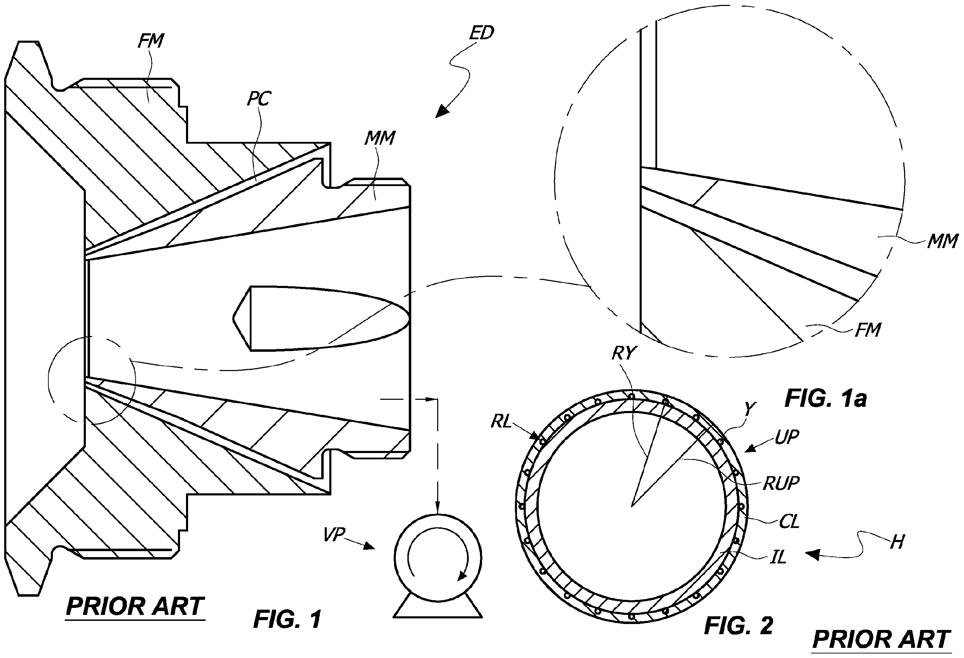

Generally, both the extruding stations, and in particular the final one, include an extruding die **ED,** as shown in FIG. 1, having male and female members **MM, FM** reciprocally faced to define a conical peripheral channel **PC** susceptible to convey and extrude the thermoplastic polymer material to form the cover layer.

In order to improve the adhesion between the semifinished hose and the cover layer, it is known to put the extruding die **ED** under vacuum by a pump **VP.**

In this manner, in the final extruding station the thermoplastic polymer material is extruded in the form of a relatively thick annular member that is drawn towards the semifinished hose to fill all the gaps thereon. As a result, as shown in FIG. 2, the cover layer **CL** of the hose **H** has a tubular shape, i.e. the radius **RY, RUP** of the hose **H** is the same in correspondence of both the yarns **Y** of the textile reinforcing layer **RL** and the portions **UP** of the outer surface of the inner layer **IL** which are not covered thereby.

This known method has the drawback that a very high vacuum is needed to effectively draw the annular member towards the semifinished hose, i.e. in the order of 70 - 80 mmHg or less.

Another drawback of this known method is that many material of the cover layer is used to fill the gaps in correspondence of the uncovered portions **UP** of the outer surface of the inner layer **IL.**

Moreover, the hose may be improved in terms of aesthetical appeal.

### Summary of the invention

The object of the present invention is to overcome the above drawbacks, by providing a method for manufacturing hoses that is highly efficient and relatively cost-effective.

A particular object is to provide a method for manufacturing hoses which is simple and cheap to be exploited.

Another object is to provide a cost-effective hose.

A further object is to provide a hose having an high aesthetical appeal.

These and other objects, as better explained hereafter, are fulfilled by the method according to which it is herein described and/or claimed and/or shown in the annexed figures.

In a further aspect, the invention provides a hose according to which it is herein described and/or claimed and/or shown in the annexed figures.

In a further aspect, the invention provides a production line according to which it is herein described and/or claimed and/or shown in the annexed figures. Moreover an extruding station is described and/or shown in the annexed figures.

Advantageous embodiments of the invention are defined in accordance to the dependent claims.

### Brief description of the figures

Further features and advantages of the invention will become more apparent from the detailed description of some preferred, non-exclusive embodiments of the invention, which are described as non-limiting examples with the help of the annexed drawings, in which:
**FIG. 1** is an axial section of an extruding die according to the prior art, some enlarged particulars thereof being shown in **FIG. 1a**;
**FIG. 2** is a radial section of a hose according to the prior art;
**FIG. 3** is an axial section of an extruding die **31,** some enlarged particulars thereof being shown in **FIG. 3a**;
**FIG. 4** is a radial section of a first embodiment of a hose **100**;
**FIG. 5** is a schematic view of a first embodiment of a production line **1**;
**FIG. 6** is a side view of the embodiment of the hose **100** of FIG. 4;
**FIG. 7** is a radial section of a second embodiment of a hose **100**.
**FIG. 8** is a schematic view of a second embodiment of a production line **1**.

### Detailed description of a preferred embodiment

The production line **1** is suitable for manufacturing a reinforced flexible hose **100**, in particular a garden hose.

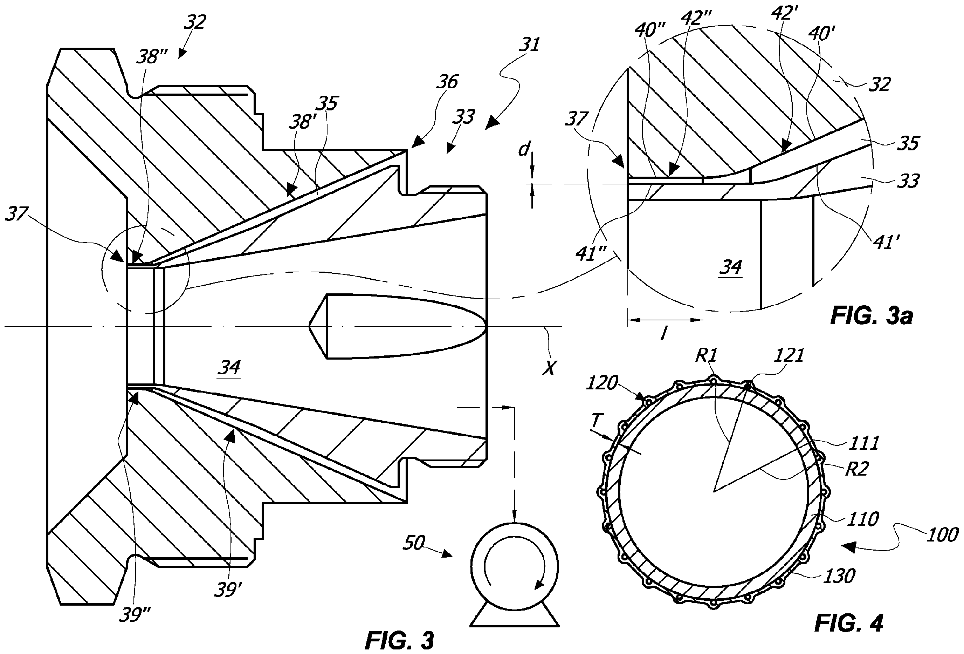

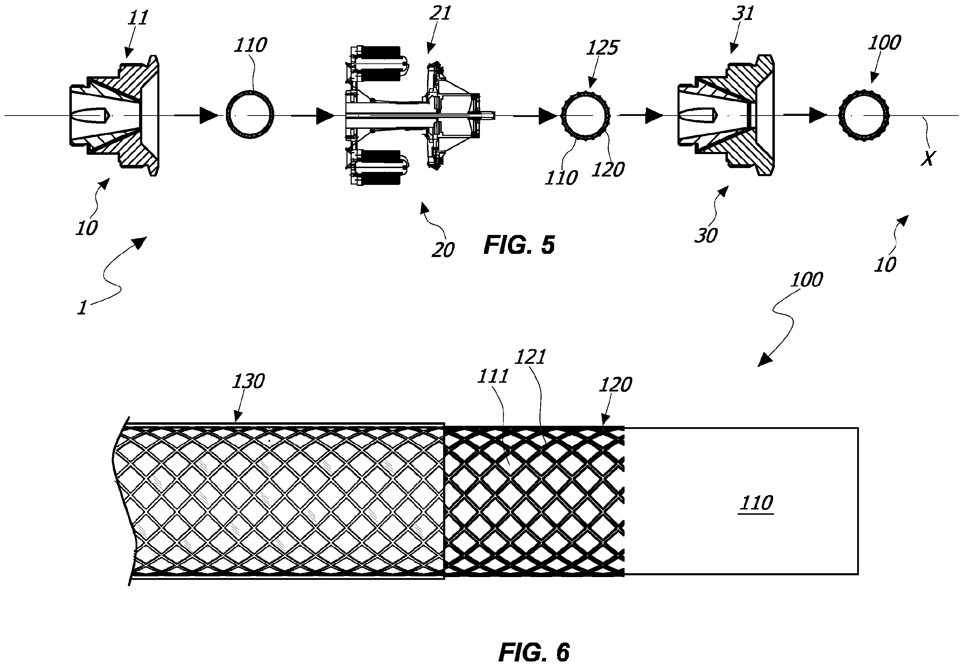

In particular, the production line **1** shown in FIG. 5 is suitable to manufacture the garden hose **100** shown in the FIGs 4 and 6.

The production line **1** essentially includes a starting extruding station **10**, a braiding or knitting station **20** and a final extruding station **30** which are subsequently placed each other along a forwarding axis **X**.

The starting extruding station **10** may include a starting extruder **11** suitable to extrude in a known manner an inner layer **110**, which may be the load-bearing one of the hose **100.**

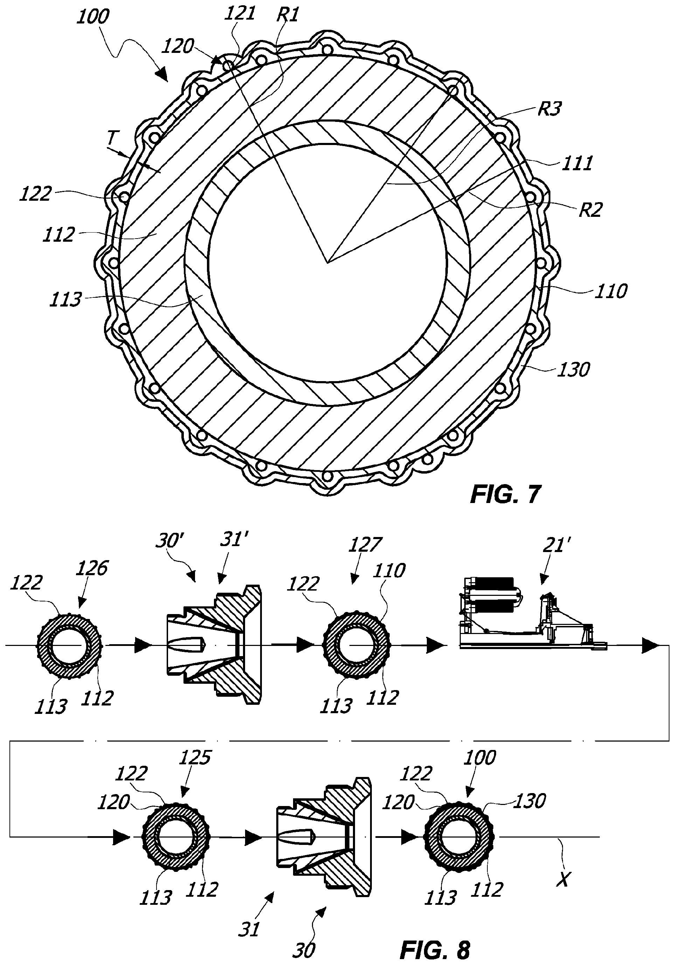

To this aim, a first thermoplastic material may be used, e.g. a plasticized PVC compound having a K value according to DIN53726 of 70 and having a Shore A hardness of 75 to 90. In a further embodiment, shown in FIG. 7, the first thermoplastic material may be a polypropylene/SEBS-based TPE-S having a Shore A hardness of 25 to 50. For example, the polypropylene/SEBS-based TPE-S may be the one disclosed in the European Patent EP2032352.

The braiding or knitting station **20** may include a braiding or knitting machine **21** suitable to braid or knit in a known manner a reinforcing textile layer **120** onto the outer surface of the inner layer **110**, so as to form a semifinished hose **125**. The yarns **121** used for braiding or knitting the reinforcing textile layer **120** may be made of polyester, for example of 280, 550, 1100, 1670 or 2200 dtex.

The braiding or knitting machine **21** braids or knits the yarns **121** each other in such a manner to leave portions **111** of the outer surface of the inner layer **110** uncovered.

The starting extruding station **10** and the braiding or knitting station **20** may define a supplying apparatus suitable to continuously supply the semifinished hose **125** to a final extruding station **30**.

The above arrangement is shown for illustration purpose only. It is understood that, for example, the starting extruding station **10** and the braiding or knitting station **20** may be equivalently replaced by a reel from which the semifinished hose **125** is continuously unwound to supply the final extruding station **30**.

On the other hand, at the inner side of the inner layer **110** one or more layers may be coupled. Moreover, more than one reinforcing textile layer **120** may be provided.

The final extruding station **30** extrudes a second thermoplastic material to form a thin tubular film defining a cover layer **130** which covers the semifinished hose **125**.

The second thermoplastic material may be a plasticized PVC compound having a K value according to DIN53726 of 70 and a Shore A hardness of 65 to 75. In a further embodiment, shown in FIG. 7, the second thermoplastic material may be the above mentioned TPE-S.

In order to extrude the thin tubular film, the final extruding station **30** may include an extruder with an extruding die **31** which includes an outer female member **32** and an inner male member **33**, each having a passing-through hole defining a central bore **34** for housing the forwarding semifinished hose **125**.

The female and male members **32**, **33** may be telescopically coupled each other to define a peripheral channel **35** having an inlet **36** for the second thermoplastic polymer material to be extruded and an outlet **37** encompassing the central bore **34** to allow the deposition of the second thermoplastic polymer material onto the semifinished hose **125** forwarding along the axis **X** to form the cover layer **130**.

Advantageously, the extruding station **30** may further include a vacuum pump **50** to put the central bore **34** under vacuum, in such a manner to draw the cover layer **130** in close contact with the semifinished hose **125.**

The female and male members **32, 33** of the extruding die **31** may have a fustoconical portion **38', 39'** and a tubular portion **38", 39",** which may be reciprocally consecutive.

The fustoconical portions **38', 39'** may have a respective slanted inner and outer surface **40', 41'** faced each other to define a slanted portion **42'** of the peripheral channel **35,** while the tubular portions **38", 39"** may have a respective substantially horizontal inner and outer surface **40", 41"** faced each other to define a substantially horizontal portion **42"** of the peripheral channel **35.**

Suitably, the slanted portion **42'** the peripheral channel **35** may be convergent to convey the second thermoplastic polymer material towards the substantially horizontal portion **42".** Moreover, the latter may have a length **l** sufficient to shape the second thermoplastic polymer material into a tubular film.

To this end, in case of the hose made of plasticized-PVC the length **l** may be not less than 1,5 mm, and preferably of 1,8 mm to 2,5 mm. On the other hand, in case of the hose made of the above mentioned TPE-S the length **l** may be of 0,5 mm to 30 mm.

In order to adjust the length l of the substantially horizontal portion **42"** of the peripheral channel **35,** the male member **33** may be movable with respect to the female member **32** along the forwarding axis **X.**

The distance **d** between the substantially horizontal inner and outer surfaces **40", 41"** of the tubular portions **38", 39"** of the extruding die **31** may be sufficient to impart a thickness **T** of 0,05 mm to 0,35 mm to the tubular film which defines the cover layer **130** to be drawn onto the semifinished hose **125** by the vacuum imparted by the vacuum pump **50.**

Preferably, the thickness **T** of the tubular film may be of 0,08 mm to 0,25 mm, and even more preferably of 0,1 mm to 0,2 mm.

It is understood that the cover layer consists of the tubular film extruded by the extruding die **31.** Therefore, in the present document the number **130** is used to equivalently indentify both the cover layer and the tubular film.

This configuration allows the continuous extrusion of the tubular film **130** without damages while uniformly covering both the yarns **121** of the reinforcing layer **120** and the uncovered portions **111** of the outer surface of the inner layer **110.**

In fact, as shown below, if the thickness **T** of the tubular film **130** is less than **0,05** mm possible damages may occur during the production process, while if thickness is greater than 0,35 mm it is not possible to provide a uniformly thick cover layer both in correspondence of the yarns **121** of the reinforcing layer **120** and of the uncovered portions **111** of the outer surface of the inner layer **110.**

It is understood that the maximum thickness **T** of the tubular film **130** depends on the inner diameter of the hose. The higher is the inner diameter of the hose, the greater is the thickness **T** of the tubular film **130.**

As a matter of fact, in case of thickness greater than the above value the polymer material tends to accumulate in correspondence of the uncovered portions **111,** as for the solutions of the state of the art shown e.g. in FIG 2.

By contrast, as shown e.g. in FIG. 4, the hose **100** manufactured according to the above method has a cover layer **130** which thickness **T** is uniform all around the hose, while having an outer radius **R1** in correspondence of the yarns **121** which is greater than the outer radius **R2** in correspondence of the uncovered portions **111.**

This is a dramatic improvement with respect to the state of the art, since no material is wasted to fill the gaps in correspondence of the uncovered portions **111.**

Due to the very low thickness of the cover layer **130,** the negative pressure reached by the vacuum pump **50** must not be too low.

Suitably, the absolute pressure in the central bore **34** may be no lower than 250 mmHg, in order to avoid breakage of the tubular film **130** during extrusion.

Preferably, the absolute pressure in the central bore **34** is of 300 mmHg to 650 mmHg, and more preferably of 300 mmHg to 500 mmHg.

In this manner, it is possible to avoid breakage of the tubular film **130** during extrusion while allowing a uniform deposition thereof to both the yarns **121** of the reinforcing layer **120** and the uncovered portions **111** of the outer surface of the inner layer **110.**

Thanks to the above method, very high linear forwarding speeds can be reached, higher than the ones reached by the solutions of the state of the art.

Preferably, the linear forwarding speed of the semifinished hose **125** through the central bore **34** of the extruding die **31** may be of 25 m/min to 45 m/min, and more preferably of 30 m/min to 40 m/min, if the reinforcing layer **120** is a braided layer. On the other hand, the linear forwarding speed of the semifinished hose **125** through the central bore **34** of the extruding die **31** may be of 1 m/min to 8 m/min if the reinforcing layer **120** is a knitted one.

In a particularly preferred embodiment of the invention, no other steps are provided to cover the cover layer **130.** In other words, the latter is the outermost layer of the hose **100,** which therefore has a single cover layer.

In this manner, thanks to the unique very low thickness thereof, a user can feel by touching both the yarns **121** of the reinforcing layer **120** and the uncovered portions **111** of the outer surface of the inner layer **110,** which improves the aesthetic appeal of the hose **100.**

Suitably, the cover layer **130** may be optically transparent, so that a user can see from outside both the yarns **121** and the uncovered portions **111** of the outer surface of the inner layer **110.**

In a further particularly preferred embodiment of the invention, the weight of the inner layer may be of 75% to 95% of the sum of the weights of the inner and the cover layers of the hose, while the weight of the cover layer may be of 25% to 5% of the sum of the weights of the inner and the cover layers of the hose.

Preferably, the weight of the inner layer may be of 80% to 95% of the sum of the weights of the inner and the cover layer of the hose, while the weight of the cover layer may be of 20% to 5% of the sum of the weights of the inner and the cover layers of the hose.

Thanks to this configuration, the hose **100** manufactured according to the above method is lighter and cost-effective with respect to the hose of the state of the art, e.g. the one shown in FIG. 2, using the same materials and having the same burst pressure.

In fact, the burst pressure resistance is substantially imparted by the reinforcing layer **120.**

By way of comparison, in the prior art hoses about 60% of the sum of the weights of the inner and the cover layers is due to the inner layer and about 40% thereof is due to the cover layer.

In both cases, i.e. in the hose of the present invention and in the ones of the prior art, the weight of the reinforcing layer being about 3% - 5% of the whole weight of the hose.

In a further aspect, the cover layer **130** may be made of virgin PVC, while the inner layer **110** may consist of regenerated PVC. In this manner, it is possible to obtain a very high cost-effective hose while maintaining a greatly pleasant aesthetic appeal.

The invention will be better shown by the following examples, which are provided for illustration purpose only and are not limitative of the invention.

### Example 1

In order to investigate the influence of the thickness of the cover layer on the hose manufacturing, the Applicant prepared 6 samples of a three-layered hose by using a production line according to the above description, e.g. the one shown in FIG. 5.

The various samples, having a length of 10 meters, consisted of an inner load-bearing layer made of a plasticized PVC compound having a K value according to DIN53726 of 70 and a Shore A hardness of 80, a reinforcing braided layer and an outer cover layer made of a plasticized PVC compound having a K value according to DIN53726 of 70 and a Shore A hardness of 70.

The formulation of the PVC inner layer is:

| | |
|---|---|
| - PVC K 70, suspension type | 44 % by weight; |
| - Plasticizier (DINP) | 24 % by weight; |
| - Calcium carbonate | 30 % by weight; |
| - Ca-Zn Stabilizer | 0,5 % by weight; |
| - Epoxidized soybean oil | 1,3 % by weight; |
| - Pigment | 0,2 % by weight; |

The formulation of the PVC cover layer is:

| | |
|---|---|
| - PVC K 70, suspension type | 58 % by weight; |
| - Plasticizier (DINP) | 39 % by weight; |
| - Ca-Zn Stabilizer | 0,5 % by weight; |
| - Epoxidized soybean oil | 2 % by weight; |
| - Pigment | 0,5 % by weight; |

The inner layer has been manufactured in a known manner by an extruding station having a conical extruding die.

The reinforcing layer has been manufactured by a braiding station having a braiding machine configured to braid each other 6+6 spools of polyester yarns of 1100 dtex. In this manner, the semifinished hose at the outlet of the braiding machine has uncovered portions having a generally diamond shape.

The outer cover layer has been manufactured by the above described extruding station having a specially extruding die as shown in FIG. 3 put under vacuum by a suitable vacuum pump, of the *per se* known type.

The linear forwarding speed of the production line was of 35 meters/minute. The vacuum pump was set to a pressure of 500 mmHg.

The extruders of the inner and the cover layers were put at a flow rate compatible with the above forwarding speed.

The inner diameter of all the samples was of 12,7 mm (1/2"), while the thickness of the inner layer thereof was of 1,27 mm.

The 6 samples had different thickness of the cover layer, from 0,05 mm to 0,5 mm.

The % by weight of the reinforcing layer is of 2,5 % to 3,5 % with respect to the whole weight of the hose.

All the samples have the same burst pressure, namely 24 bars.

The following table 1 shows the data of the various samples.

**Table 1**

| **Sample** | **Thickness inner layer** | **Thickness cover layer** | **Total weight/mt hose, gr** | **Weight/mt inner layer, gr** | **Weight/mt cover layer, gr** | **% inner layer/ weight of inner + cover layer** | **% cover layer / weight of inner + cover layer** |
|---|---|---|---|---|---|---|---|
| **1** | 1,27 mm | 0,03 mm | 79,2 | 75,3 | 1,2 | 98,4 | 1,6 |
| **2** | 1,27 mm | 0,1 mm | 82,7 | 75,3 | 4,7 | 94,1 | 5,9 |
| **3** | 1,27 mm | 0,2 mm | 90,5 | 75,3 | 12,5 | 85,7 | 13,8 |
| **4** | 1,27 mm | 0,3 mm | 95,7 | 75,3 | 17,7 | 80,9 | 19,1 |
| **5** | 1,27 mm | 0,4 mm | 102,4 | 75,3 | 24,4 | 75,5 | 24,5 |
| **6** | 1,27 mm | 0,5 mm | 109,1 | 75,3 | 31,1 | 70,7 | 29,3 |

From the manufacturing point of view, the cover layer of the sample 1 had several rents and damages.

The samples 2 to 4 provided a hose in which the cover layer uniformly covered both the yarns of the reinforcing layer and the diamond-shaped uncovered portions of the outer surface of the inner layer, as shown e.g. in FIG 2.

By contrast, in the samples 5 and 6 the cover layer did not uniformly cover the reinforcing layer and the inner one. In particular, the PVC compound of the cover layer accumulated in correspondence of the diamond-shaped uncovered portions of the outer surface of the inner layer. Apparently, the samples 5 and 6 fall outside the scope of the appended claims, and therefore cannot be considered as part of the present invention.

### Example 2

In order to investigate the influence of the inner diameter on the thickness of the outer cover layer, four samples (A to D) have been manufactured having different inner diameters, i.e. 12,7 mm (1/2"), 15,9 mm (5/8"), 19 mm (3/4") and 25,4 mm (1")

The following table 2 shows the data of the various samples.

**Table 2**

| **Sample** | **Inner diameter** | **Reinforcing layer, DTEX** | **Thickness inner layer** | **Thickness cover layer** | **Weight/mt hose, gr** | **Weigh/mt inner layer, gr** | **Weigh/mt cover layer, gr** | **% inner layer / weight of inner + cover layer** | **% cover layer / weight of inner + cover layer** |
|---|---|---|---|---|---|---|---|---|---|
| **A** | 12,7 mm | 1100 | 1,27 mm | 0,2 mm | 90,5 | 75,3 | 12,5 | 85,7 | 14,3 |
| **B** | 15,9 mm | 1100 | 1,32 mm | 0,25 mm | 109,54 | 87,71 | 18,55 | 82,5 | 17,5 |
| **C** | 19 mm | 1100 | 1,36 mm | 0,3 mm | 151,37 | 118,96 | 27,87 | 81,0 | 19,0 |
| **D** | 25,4 mm | 1670 | 2,18 mm | 0,35 mm | 312,18 | 257,13 | 45,68 | 84,9 | 15,1 |

In all samples the cover layer uniformly covered both the yarns of the reinforcing layer and the diamond-shaped uncovered portions of the outer surface of the inner layer, as shown e.g. in FIG 2.

### Example 3

In order to investigate the influence of the pressure of the vacuum pump on the hose manufacturing, the Applicant prepared the above sample 3 by setting the vacuum pump to different pressures of 200 mmHg, 300 mmHg, 350 mmHg, 400 mmHg, 450 mmHg, 600 mmHg and 700 mmHg.

The sample prepared with the vacuum pump at pressure of 200 mmHg had the cover layer damaged.

The samples prepared with the vacuum pump at pressures of 300 mmHg to 600 mmHg had no difference with respect to the samples 2 to 4 of the above example 1, which were manufactured at 500 mmHg.

The sample prepared with the vacuum pump at pressure of 700 mmHg had the cover layer which did not cover the diamond-shaped uncovered portions of the outer surface of the inner layer in a uniform manner. In particular, in some points the cover layer did not adhere to the uncovered portions of the inner layer.

### Example 4

In order to investigate the influence of the forwarding linear speed on the hose manufacturing, the Applicant prepared the samples 1, 3 and 5 of the above example 1 at different forwarding linear speed of 25 m/min and 45 m/min.

No difference was noticed on the hose configuration with respect to the samples of the example 1, which was manufactured at 35 m/min.

### Example 5

In order to investigate the influence of the shape of the extruding die on the hose manufacturing, the Applicant compared the samples 2 to 4 of the above example 1 with samples having the same features, but manufactured with a final extruding station including a conical extruding die according to the prior art, as shown in FIG. 1.

The male and female members was put at a minimum distance of 0,1 mm, 0,2 mm and 0,3 mm, equivalent to the distance between the tubular portions of the male and female members of the extruding die of the present invention needed to extrude the cover layer of the above samples 2 to 4.

The samples thus manufactured had a not uniform cover layer. In particular, the PVC compound of the cover layer accumulated in correspondence of the diamond-shaped uncovered portions of the outer surface of the inner layer. Moreover, the cover layer had several damages on all samples.

### Example 6

The Applicant manufactured another example of a garden hose **100** according to the present invention, which is shown in FIG. 7.

The hose includes, from the outer to the inner side, a cover layer **130,** a double spirally-wrapped textile reinforcing layer **120,** a first thermoplastic inner layer **110,** a braided textile reinforcing layer **122,** a second load-bearing thermoplastic inner layer **112** and a third thermoplastic inner layer **113,** which is susceptible to contact the liquid to be transported, e.g. water.

The first thermoplastic inner layer **110,** the second load-bearing thermoplastic inner layer **112** and the third thermoplastic inner layer **113** are made of Nilflex SH® (Taro Plast SpA), a polypropylene/SEBS-based TPE-S having a Shore A hardness of 40.

On the other hand, the double spirally-wrapped textile reinforcing layer **120** and the braided textile reinforcing layer **122** are respectively made of 2 and 6+6 yarns Brilen GLE® (Brilen Tech SA) of 550 dtex.

The inner diameter of the hose is 7,9 mm, while the maximum outer diameter, i.e. the one in correspondence of the yarn **121** is 12,7 mm.

As schematically shown in FIG. 8, the hose is manufactured by provided a first semifinished hose **126** including the third thermoplastic inner layer **113,** the second load-bearing thermoplastic inner layer **112** and the braided textile reinforcing layer **122** to an extruding station **30'** including an extruding die **31'** suitable to manufacture the first thermoplastic inner layer **110.**

The extruding die **31'** is put under vacuum at about 300 mmHg to manufacture a tubular film which is in close contact with the underlying layers, as described above.

The second semifinished hose **127** is fed to a spiral wrapping machine **21'** to obtain the third semifinished hose **125.**

The latter is fed to an extruding station **30** including an extruding die **31** put under vacuum at about 300 mmHg to obtain the tubular film-cover layer **130.**

In both the extruding dies **31'** and **31,** the slanted portion **42'** has a length **l** of 1 mm.

The thicknesses (mm) and weights (gr/mt) of the various layers are:
- cover layer **130:** 0,1 mm thickness, 3,5 gr/mt weight;
- spirally-wrapped textile reinforcing layer **120:** 0,1 mm thickness, 3,5 gr/mt weight;
- first thermoplastic inner layer **110:** 0,1 mm thickness, 3,5 gr/mt weight;
- braided textile reinforcing layer **122:** 0,1 mm thickness, 3,5 gr/mt weight;
- second thermoplastic inner layer **112:** 1,7 mm thickness, 49 gr/mt weight;
- third thermoplastic inner layer **113:** 0,3 mm thickness, 7 gr/mt weight.

Therefore, the weight of the cover layer **130** is about 5,55% of the sum of the weights of the thermoplastic layers **113, 112, 110** and **130.**

## Claims

1. A method for continuously manufacturing a reinforced flexible hose (**100**), in particular a garden hose, comprising the steps of:
- providing a semifinished hose (**125**) including at least one inner layer (**110**) and at least one textile reinforcing layer (**120**) formed by at least one yarn (**121**) wound on the outer surface thereof in such a manner to leave uncovered portions (**111**) of the same outer surface of said at least one inner layer (**110**);
- extruding a thermoplastic polymer material onto said semifinished hose (**125**) to form a cover layer (**130**);
wherein said extruding step is accomplished by an extruding die (**31**) having a central bore (**34**) defining a forwarding axis (**X**) for housing the semifinished hose (**125**) and a peripheral channel (**35**) having at least one inlet (**36**) for the thermoplastic polymer material to be extruded and an outlet (**37**) encompassing the central bore (**34**) to allow the deposition of the thermoplastic polymer material onto the semifinished hose (**125**) to form the cover layer (**130**);
wherein said extruding step is accomplished by putting said central bore (**34**) under vacuum to draw the cover layer (**130**) in close contact with the semifinished hose (**125**);
wherein the peripheral channel (**35**) includes a slanted tubular portion (**42'**) and a substantially horizontal tubular portion (**42"**) in correspondence of said outlet (**37**), the slanted portion (**42'**) being convergent to convey the thermoplastic polymer material towards the substantially horizontal portion (**42"**), the latter having a length (**l**) sufficient to shape the thermoplastic polymer material into a tubular film to be drawn onto the semifinished hose (**125**) by the vacuum so as to form the cover layer (**130**);
wherein the thickness (**T**) of said cover layer (**130**) is of 0,05 mm to 0,35 mm to allow continuous extruding thereof without damages while uniformly covering both the yarns (**121**) of the at least one reinforcing layer (**120**) and the uncovered portions (**111**) of the outer surface of the at least one inner layer (**110**), in such a manner that the finished hose (**100**) has a uniformly thick cover layer (**130**) while having an outer radius (**R1**) in correspondence of said at least one yarn (**121**) of said at least one reinforcing layer (**120**) which is greater than the minimum outer radius (**R2**) in correspondence of the uncovered portions (**111**) of the at least one inner layer (**110**);
wherein the absolute pressure in said central bore (**34**) is no lower than 250 mmHg in order to avoid damages to the cover layer (130).

2. Method as claimed in claim 1, wherein said slanted and substantially horizontal portions (42', 42") of said peripheral channel (35) are reciprocally consecutive.

3. Method as claimed in claim 1 or 2, wherein said extruding die (31) includes an outer female member (32) and an inner male member (33) telescopically coupled each other to define said peripheral channel (35), both said male and female members (32, 33) having a passing-through hole defining said central bore (34).

4. Method as claimed in claim 3, wherein both said male and female members (**32, 33**) have a fustoconical portion (**38', 39'**) and a substantially tubular portion (**38", 39"**), the fustoconical portions (**38', 39'**) of said female and male members (**32, 33**) having a respective slanted inner and outer surface (**40', 41'**) faced each other to define said slanted portion (**42'**) of said peripheral channel (**35**), the tubular portions (**38", 39"**) of said female and male members (**32, 33**) having a respective substantially horizontal inner and outer surface (**40", 41"**) faced each other to define said substantially horizontal portion (**42"**) of said peripheral channel (**35**), the distance thereof imparting the thickness (**T**) to said cover layer (**130**).

5. Method as claimed in claim 3 or 4, wherein said male member (**33**) is movable with respect to said female member (**32**) along said forwarding axis (**X**) to adjust the length (**l**) of the substantially horizontal portion (**42"**) of said peripheral channel (**35**).

6. Method as claimed in one or more of the preceding claims, wherein the absolute pressure in said central bore (**34**) is of 250 mmHg to 650 mmHg in order to avoid damages to the cover layer (**130**) while allowing a uniform deposition thereof to both the yarns (**121**) of the at least one reinforcing layer (**120**) and the uncovered portions (**111**) of the outer surface of the at least one inner layer (**110**).

7. Method as claimed in one or more of the preceding claims, wherein said providing step is accomplished by first extruding said at least one inner layer (**110**) and by subsequently braiding or knitting onto said at least one inner layer (**110**) the at least one textile reinforcing layer (**120**).

8. Method as claimed in one or more of the preceding claims, wherein no other steps are provided to cover the cover layer (**130**) so that the latter is the outermost layer of the finished hose (**100**), in such a manner that a user can feel by touching both the yarns (**121**) of the at least one reinforcing layer (**120**) and the uncovered portions (**111**) of the outer surface of the at least one inner layer (**110**).

9. A hose, in particular a garden hose, comprising:
- at least one inner layer (**110**);
- at least one textile reinforcing layer (**120**) formed by at least one yarn (**121**) wound on the outer surface of said at least one inner layer (**110**) in such a manner to leave uncovered portions (**111**) thereof; and
- a cover layer (**130**) consisting of a tubular film having thickness (**T**) of 0,05 mm to 0,35 mm;
wherein said cover layer (**130**) has a uniform thickness while having an outer radius (**R1**) in correspondence of said at least one yarn (**121**) of the at least one textile reinforcing layer (**120**) which is greater than the minimum outer radius (**R2**) in correspondence of the uncovered portions (**111**) of said at least one inner layer (**110**).

10. Hose as claimed in claim 9, wherein the cover layer (**130**) is the outermost layer of the hose.

11. Hose as claimed in claim 9 or 10, wherein the weight of said at least one inner layer (**110**) is 75% to 95% of the sum of the weights of the at least one inner layer (**110**) and the cover layer (**130**) of the hose, the weight of said cover layer (**130**) being 25% to 5% of the sum of the weights of the at least one inner layer (**110**) and the cover layer (**130**) of the hose.

12. Hose as claimed in claim 9 or 10, wherein the weight of said at least one inner layer (**110**) is 80% to 95% of the sum of the weights of the at least one inner layer (**110**) and the cover layer (**130**) of the hose, the weight of said cover layer (**130**) being 20% to 5% of the sum of the weights of the at least one inner layer (**110**) and the cover layer (**130**) of the hose.

13. Hose as claimed in one or more of claims 9 to 12, wherein said cover layer (**130**) is optically transparent, so that the yarns (**121**) of the at least one reinforcing layer (**120**) and the uncovered portions (**111**) of the outer surface of the at least one inner layer (**110**) are visible from outside.

14. Hose as claimed in any one of claims 9 to 13, wherein the thickness (**T**) of said cover layer (**130**) is of 0,08 mm to 0,25 mm, and even more preferably of 0,1 mm to 0,2 mm.

15. A production line for continuously manufacturing a reinforced flexible hose (**100**), in particular a garden hose, according to one or more of the claims 9 to 14, comprising:
- an extruding station (**30**);
- a supplying apparatus (**10, 20**) for continuously supplying to said extruding station (**30**) a semifinished hose (**125**) including at least one inner layer (**110**) and at least one textile reinforcing layer (**120**) formed by at least one yarn (**121**) wound on the outer surface thereof in such a manner to leave uncovered portions (**111**) of the same outer surface of said at least one inner layer (**110**);
wherein said extruding station (**30**) includes an extruding die (**31**) having a central bore (**34**) defining a forwarding axis (**X**) for housing the semifinished hose (**125**) and a peripheral channel (**35**) having at least one inlet (**36**) for a thermoplastic polymer material to be extruded and an outlet (**37**) encompassing the central bore (**34**) to allow the deposition of the thermoplastic polymer material onto the semifinished hose (**125**) to form a cover layer (**130**);
wherein said extruding station (**30**) includes a vacuum pump (**50**) to put said central bore (**34**) under vacuum, in such a manner to draw the cover layer (**130**) in close contact with the semifinished hose (**125**);
wherein the peripheral channel (**35**) includes a slanted tubular portion (**42'**) and a substantially horizontal tubular portion (**42"**) in correspondence of said outlet (**37**), the slanted portion (**42'**) being convergent to convey the thermoplastic polymer material towards the substantially horizontal tubular portion (**42"**), the latter having a length (**l**) sufficient to shape the thermoplastic polymer material into a tubular film to be drawn onto the semifinished hose (**125**) by the vacuum, so as to form the cover layer (**130**);
wherein the substantially horizontal tubular portion (**42"**) of said peripheral channel (**35**) is configured so that the thickness (**T**) of said cover layer (**130**) is of 0,05 mm to 0,35 mm to allow continuous extruding thereof without damages while uniformly covering both the yarns (**121**) of the at least one reinforcing layer (**120**) and the uncovered portions (**111**) of the outer surface of the at least one inner layer (**110**), in such a manner that the finished hose (**100**) has a uniformly thick cover layer (**130**) while having an outer radius (**R1**) in correspondence of the yarns (**121**) of the at least one reinforcing layer (**120**) which is greater than the minimum outer radius (**R2**) in correspondence of the uncovered portions (**111**) of the at least one inner layer (**110**);
wherein said vacuum pump (**50**) is set in such a manner that the absolute pressure in said central bore (**34**) is no lower than 250 mmHg in order to avoid damages to the cover layer (**130**).

## Patentansprüche

1. Verfahren zur kontinuierlichen Herstellung eines verstärkten flexiblen Schlauchs (100), insbesondere eines Gartenschlauchs, umfassend die Schritte von:
- Bereitstellen eines halbfertigen Schlauchs (125) mit mindestens einer Innenschicht (110) und mindestens einer auf der Außenfläche davon gewickelten textilen Verstärkungsschicht (120), die aus mindestens einem Faden (121) gebildet ist, derart dass unbedeckte Abschnitte (111) derselben Außenfläche der mindestens einen Innenschicht (110) verbleiben;
- Extrudieren eines thermoplastischen Polymermaterials auf den halbfertigen Schlauch (125), um eine Deckschicht (130) zu bilden;
wobei der Extrusionsschritt durch eine Extrusionsdüse (31) mit einer zentralen Bohrung (34), die eine Transportachse (X) zur Aufnahme des halbfertigen Schlauchs (125) definiert, und einem Umfangskanal (35) mit mindestens einem Einlass (36) für das zu extrudierende thermoplastische Polymermaterial und einem die zentrale Bohrung (34) umgebenden Auslass (37), durchgeführt wird, um das Abscheiden des thermoplastischen Polymermaterials auf dem halbfertigen Schlauch (125) zur Bildung der Deckschicht (130) zu ermöglichen;
wobei der Extrusionsschritt durch unter Vakuum setzen der zentralen Bohrung (34) durchgeführt wird, um die Deckschicht (130) in engem Kontakt mit dem halbfertigen Schlauch (125) zu ziehen;
wobei der Umfangskanal (35) einen abgeschrägten rohrförmigen Abschnitt (42') und einen im Wesentlichen horizontalen rohrförmigen Abschnitt (42") korrespondierend zu dem Auslass (37) beinhaltet, wobei der abgeschrägte Abschnitt (42') konvergent ist, um das thermoplastische Polymermaterial in Richtung des im Wesentlichen horizontalen Abschnitts (42") zu fördern, wobei letzterer eine Länge (l) aufweist, die ausreicht, um das thermoplastische Polymermaterial zu einer rohrförmigen Folie zu formen, die durch das Vakuum auf den halbfertigen Schlauch (125) gezogen wird, um so die Deckschicht (130) zu bilden;
wobei die Dicke (T) der Deckschicht (130) von 0,05 mm bis 0,35 mm beträgt, um ein kontinuierliches Extrudieren ohne Beschädigungen zu ermöglichen, während sowohl die Fäden (121) der mindestens einen Verstärkungsschicht (120) als auch die unbedeckten Abschnitte (111) der Außenfläche der mindestens einen Innenschicht (110) gleichmäßig abgedeckt werden, so dass der fertige Schlauch (100) eine gleichmäßig dicke Deckschicht (130) aufweist, während er einen Außenradius (R1) entsprechend dem mindestens einen Faden (121) der mindestens einen Verstärkungsschicht (120) aufweist, der größer ist als der minimale Außenradius (R2) entsprechend den unbedeckten Abschnitten (111) der mindestens einen Innenschicht (110);
wobei der absolute Druck in der zentralen Bohrung (34) nicht niedriger als 250 mmHg ist, um Schäden an der Deckschicht (130) zu vermeiden.

2. Verfahren, wie in Anspruch 1 beansprucht, worin die abgeschrägten und im Wesentlichen horizontalen Abschnitte (42', 42") des peripheren Kanals (35) gegenseitig aufeinanderfolgend sind.

3. Verfahren, wie in Anspruch 1 oder 2 beansprucht, wobei die Extrusionsdüse (31) ein äußeres weibliches Element (32) und ein inneres männliches Element (33) umfasst, die teleskopartig miteinander gekoppelt sind, um den Umfangskanal (35) zu definieren, wobei sowohl das männliche als auch das weibliche Element (32, 33) ein Durchgangsloch aufweisen, das die zentrale Bohrung (34) definiert.

4. Verfahren, wie in Anspruch 3 beansprucht, wobei sowohl die männlichen als auch die weiblichen Elemente (32, 33) einen kegelstumpfförmigen Abschnitt (38', 39') und einen im Wesentlichen rohrförmigen Abschnitt (38", 39") aufweisen, wobei die kegelstumpfförmigen Abschnitte (38', 39') der weiblichen und männlichen Elemente (32, 33) jeweils eine schräge Innen- und Außenfläche (40', 41') aufweisen, die einander gegenüberliegen, um den abgeschrägten Abschnitt (42') des Umfangskanals (35) zu definieren, wobei die rohrförmigen Abschnitte (38", 39") der weiblichen und männlichen Elemente (32, 33) mit jeweils einer im Wesentlichen horizontalen Innen- und Außenfläche (40", 41"), die einander gegenüberliegen, den im Wesentlichen horizontalen Abschnitt (42") des Umfangskanals (35) definieren, wobei der Abstand davon der Deckschicht (130) die Dicke (T) verleiht.

5. Verfahren, wie in Anspruch 3 oder 4 beansprucht, wobei das männliche Element (33) in Bezug auf das weibliche Element (32) entlang der Förderachse (X) beweglich ist, um die Länge (I) des im Wesentlichen horizontalen Abschnitts (42") des Umfangskanals (35) einzustellen.

6. Verfahren, wie in einem oder mehreren der vorstehenden Ansprüche beansprucht, wobei der absolute Druck in der zentralen Bohrung (34) von 250 mmHg bis 650 mmHg beträgt, um Schäden an der Deckschicht (130) zu vermeiden und gleichzeitig eine gleichmäßige Abscheidung auf sowohl den Fäden (121) der mindestens einen Verstärkungsschicht (120) als auch auf den unbedeckten Abschnitten (111) der Außenfläche der mindestens einen Innenschicht (110) zu ermöglichen.

7. Verfahren, wie in einem oder mehreren der vorhergehenden Ansprüche beansprucht, wobei der Bereitstellungsschritt durch erstes Extrudieren der mindestens einen inneren Schicht (110) und anschließendes Flechten oder Stricken der mindestens einen textilen Verstärkungsschicht (120) auf die mindestens eine innere Schicht (110) durchgeführt wird.

8. Verfahren, wie in einem oder mehreren der vorstehenden Ansprüche beansprucht, wobei keine weiteren Schritte vorgesehen sind, um die Deckschicht (130) abzudecken, so dass diese die äußerste Schicht des fertigen Schlauchs (100) ist, so dass ein Benutzer durch Berühren sowohl die Fäden (121) der mindestens einen Verstärkungsschicht (120) als auch die unbedeckten Abschnitte (111) der Außenfläche der mindestens einen Innenschicht (110) fühlen kann.

9. Schlauch, insbesondere Gartenschlauch, umfassend:
- mindestens eine innere Schicht (110);
- mindestens eine textile Verstärkungsschicht (120), die durch mindestens einen Faden (121) gebildet wird, der auf der Außenfläche der mindestens einen Innenschicht (110) so gewickelt ist, dass unbedeckte Abschnitte (111) davon verbleiben; und
- eine Deckschicht (130), die aus einem Schlauchfilm mit einer Dicke (T) von 0,05 mm bis 0,35 mm besteht;
wobei die Deckschicht (130) eine gleichmäßige Dicke aufweist, während sie einen Außenradius (R1) entsprechend dem mindestens einen Faden (121) der mindestens einen textilen Verstärkungsschicht (120) aufweist, der größer ist als der minimale Außenradius (R2) entsprechend den unbedeckten Abschnitten (111) der mindestens einen Innenschicht (110).

10. Schlauch, wie in Anspruch 9 beansprucht, wobei die Deckschicht (130) die äußerste Schicht des Schlauchs ist.

11. Schlauch, wie in Anspruch 9 oder 10 beansprucht, wobei das Gewicht der mindestens einen Innenschicht (110) 75% bis 95% der Summe der Gewichte der mindestens einen Innenschicht (110) und der Deckschicht (130) des Schlauches beträgt, wobei das Gewicht der Deckschicht (130) 25% bis 5% der Summe der Gewichte der mindestens einen Innenschicht (110) und der Deckschicht (130) des Schlauches beträgt.

12. Schlauch, wie in Anspruch 9 oder 10 beansprucht, wobei das Gewicht der mindestens einen Innenschicht (110) 80% bis 95% der Summe der Gewichte der mindestens einen Innenschicht (110) und der Deckschicht (130) des Schlauches beträgt, wobei das Gewicht der Deckschicht (130) 20% bis 5% der Summe der Gewichte der mindestens einen Innenschicht (110) und der Deckschicht (130) des Schlauches beträgt.

13. Schlauch, wie in einem oder mehreren der Ansprüche 9 bis 12 beansprucht, wobei die Deckschicht (130) optisch transparent ist, so dass die Fäden (121) der mindestens einen Verstärkungsschicht (120) und die unbedeckten Abschnitte (111) der Außenfläche der mindestens einen Innenschicht (110) von außen sichtbar sind.

14. Schlauch, wie in einem der Ansprüche 9 bis 13 beansprucht, wobei die Dicke (T) der Deckschicht (130) von 0,08 mm bis 0,25 mm und noch bevorzugter von 0,1 mm bis 0,2 mm beträgt.

15. Produktionslinie zur kontinuierlichen Herstellung eines verstärkten flexiblen Schlauchs (100), insbesondere eines Gartenschlauchs, nach einem oder mehreren der Ansprüche 9 bis 14, umfassend:
- eine Extrudierstation (30);
- eine Zuführvorrichtung (10, 20) zum kontinuierlichen Zuführen eines halbfertigen Schlauches (125) zu der Extrudierstation (30), der mindestens eine Innenschicht (110) und mindestens eine textile Verstärkungsschicht (120) aufweist, die aus mindestens einem Faden (121) gebildet ist, der auf dessen Außenfläche so gewickelt ist, dass unbedeckte Abschnitte (111) derselben Außenfläche der mindestens einen Innenschicht (110) verbleiben;
wobei die Extrudierstation (30) eine Extrusionsdüse (31) mit einer zentralen Bohrung (34), die eine Transportachse (X) zur Aufnahme des halbfertigen Schlauchs (125) definiert, und einen Umfangskanal (35) mit mindestens einem Einlass (36) für ein zu extrudierendes thermoplastisches Polymermaterial und einem die zentrale Bohrung (34) umgebenden Auslass (37) umfasst, um die Abscheidung des thermoplastischen Polymermaterials auf dem halbfertigen Schlauch (125) zur Bildung einer Deckschicht (130) zu ermöglichen;
wobei die Extrudierstation (30) eine Vakuumpumpe (50) umfasst, um die zentrale Bohrung (34) unter Vakuum zu setzen und die Deckschicht (130) in engen Kontakt mit dem halbfertigen Schlauch (125) zu ziehen;
wobei der Umfangskanal (35) einen abgeschrägten rohrförmigen Abschnitt (42') und einen im Wesentlichen horizontalen rohrförmigen Abschnitt (42") korrespondierend zu dem Auslass (37) umfasst, wobei der abgeschrägte Abschnitt (42') konvergent ist, um das thermoplastische Polymermaterial in Richtung des im Wesentlichen horizontalen rohrförmigen Abschnitts (42") zu fördern, wobei letzterer eine Länge (l) aufweist, die ausreicht, um das thermoplastische Polymermaterial zu einer rohrförmigen Folie zu formen, die durch das Vakuum auf den halbfertigen Schlauch (125) gezogen wird, um so die Deckschicht (130) zu bilden;
wobei der im Wesentlichen horizontale rohrförmige Abschnitt (42") des Umfangskanals (35) so konfiguriert ist, dass die Dicke (T) der Deckschicht (130) von 0,05 mm bis 0,35 mm beträgt, um ein kontinuierliches Extrudieren ohne Beschädigungen zu ermöglichen, während sowohl die Fäden (121) der mindestens einen Verstärkungsschicht (120) als auch die unbedeckten Abschnitte (111) der Außenfläche der mindestens einen Innenschicht (110) gleichmäßig bedeckt werden, so dass der fertige Schlauch (100) eine gleichmäßig dicke Deckschicht (130) aufweist, während er einen Außenradius (R1) entsprechend den Fäden (121) der mindestens einen Verstärkungsschicht (120) aufweist, der größer ist als der minimale Außenradius (R2) entsprechend den unbedeckten Abschnitten (111) der mindestens einen Innenschicht (110);
wobei die Vakuumpumpe (50) so eingestellt ist, dass der absolute Druck in der zentralen Bohrung (34) nicht niedriger als 250 mmHg ist, um Schäden an der Deckschicht (130) zu vermeiden.

## Revendications

1. Procédé de fabrication en continu d'un tuyau flexible renforcé (100), notamment un tuyau d'arrosage, comprenant les étapes de :
- fourniture d'un tuyau semi-fini (125) incluant au moins une couche intérieure (110) et au moins une couche de renforcement en textile (120) formée par au moins un fil (121) enroulé sur la surface extérieure de celle-ci de manière à laisser des portions découvertes (111) de la même surface extérieure de ladite au moins une couche intérieure (110) ;
- extrusion d'un matériau polymère thermoplastique sur ledit tuyau semi-fini (125) pour former une couche de couverture (130) ;
dans lequel ladite étape d'extrusion est accomplie par une matrice d'extrusion (31) ayant un alésage central (34) définissant un axe d'acheminement (X) pour loger le tuyau semi-fini (125) et un canal périphérique (35) ayant au moins un orifice d'entrée (36) pour le matériau polymère thermoplastique à extruder et un orifice de sortie (37) encerclant l'alésage central (34) pour permettre le dépôt du matériau polymère thermoplastique sur le tuyau semi-fini (125) pour former la couche de couverture (130) ;
dans lequel ladite étape d'extrusion est accomplie en mettant ledit alésage central (34) sous vide pour attirer la couche de couverture (130) en contact étroit avec le tuyau semi-fini (125) ;
dans lequel le canal périphérique (35) inclut une portion tubulaire inclinée (42') et une portion tubulaire sensiblement horizontale (42") en correspondance avec ledit orifice de sortie (37), la portion inclinée (42') étant convergente pour transporter le matériau polymère thermoplastique vers la portion sensiblement horizontale (42"), cette dernière ayant une longueur (I) suffisante pour façonner le matériau polymère thermoplastique en un film tubulaire à attirer sur le tuyau semi-fini (125) par le vide de façon à former la couche de couverture (130) ;
dans lequel l'épaisseur (T) de ladite couche de couverture (130) est de 0,05 mm à 0,35 mm pour permettre l'extrusion de celle-ci en continu sans dommage tout en couvrant uniformément à la fois les fils (121) de l'au moins une couche de renforcement (120) et les portions découvertes (111) de la surface extérieure de l'au moins une couche intérieure (110), de manière à ce que le tuyau fini (100) ait une couche de couverture d'épaisseur uniforme (130) tout en ayant un rayon extérieur (R1) en correspondance avec ledit au moins un fil (121) de ladite au moins une couche de renforcement (120) qui est supérieur au rayon extérieur minimal (R2) en correspondance avec les portions découvertes (111) de l'au moins une couche intérieure (110) ;
dans lequel la pression absolue dans ledit alésage central (34) n'est pas inférieure à 250 mmHg afin d'éviter des dommages à la couche de couverture (130).

2. Procédé selon la revendication 1, dans lequel lesdites portions inclinée et sensiblement horizontale (42', 42") dudit canal périphérique (35) sont réciproquement consécutives.

3. Procédé selon la revendication 1 ou 2, dans lequel ladite matrice d'extrusion (31) inclut un organe femelle extérieur (32) et un organe mâle intérieur (33) accouplés de façon télescopique l'un à l'autre pour définir ledit canal périphérique (35), lesdits organes mâle et femelle (32, 33) ayant tous deux un trou traversant définissant ledit alésage central (34).

4. Procédé selon la revendication 3, dans lequel lesdits organes mâle et femelle (32, 33) ont tous deux une portion tronconique (38', 39') et une portion sensiblement tubulaire (38", 39"), les portions tronconiques (38', 39') desdits organes femelle et mâle (32, 33) ayant des surfaces intérieure et extérieure inclinées (40', 41') respectives tournées l'une vers l'autre pour définir ladite portion inclinée (42') dudit canal périphérique (35), les portions tubulaires (38", 39") desdits organes femelle et mâle (32, 33) ayant des surfaces intérieure et extérieure sensiblement horizontales (40", 41") respectives tournées l'une vers l'autre pour définir ladite portion sensiblement horizontale (42") dudit canal périphérique (35), leur distance conférant l'épaisseur (T) à ladite couche de couverture (130).

5. Procédé selon la revendication 3 ou 4, dans lequel ledit organe mâle (33) est mobile par rapport audit organe femelle (32) selon ledit axe d'acheminement (X) pour régler la longueur (I) de la portion sensiblement horizontale (42") dudit canal périphérique (35).

6. Procédé selon l'une ou plusieurs des revendications précédentes, dans lequel la pression absolue dans ledit alésage central (34) est de 250 mmHg à 650 mmHg afin d'éviter des dommages à la couche de couverture (130) tout en permettant le dépôt uniforme de celle-ci à la fois sur les fils (121) de l'au moins une couche de renforcement (120) et les portions découvertes (111) de la surface extérieure de l'au moins une couche intérieure (110).

7. Procédé selon l'une ou plusieurs des revendications précédentes, dans lequel ladite étape de fourniture est accomplie tout d'abord par extrusion de ladite au moins une couche intérieure (110) et ensuite par tressage ou tricotage sur ladite au moins une couche intérieure (110) de l'au moins une couche de renforcement en textile (120).

8. Procédé selon l'une ou plusieurs des revendications précédentes, dans lequel aucune autre étape n'est prévue pour couvrir la couche de couverture (130) de sorte que cette dernière soit la couche la plus à l'extérieur du tuyau fini (100), de manière à ce qu'un utilisateur puisse sentir en touchant à la fois les fils (121) de l'au moins une couche de renforcement (120) et les portions découvertes (111) de la surface extérieure de l'au moins une couche intérieure (110).

9. Tuyau, notamment tuyau d'arrosage, comprenant :
- au moins une couche intérieure (110) ;
- au moins une couche de renforcement en textile (120) formée par au moins un fil (121) enroulé sur la surface extérieure de ladite au moins une couche intérieure (110) de manière à laisser des portions découvertes (111) de celle-ci ; et
- une couche de couverture (130) constituée d'un film tubulaire ayant une épaisseur (T) de 0,05 mm à 0,35 mm ;
dans lequel ladite couche de couverture (130) a une épaisseur uniforme tout en ayant un rayon extérieur (R1) en correspondance avec ledit au moins un fil (121) de l'au moins une couche de renforcement en textile (120) qui est supérieur au rayon extérieur minimal (R2) en correspondance avec les portions découvertes (111) de ladite au moins une couche intérieure (110).

10. Tuyau selon la revendication 9, dans lequel la couche de couverture (130) est la couche la plus à l'extérieur du tuyau.

11. Tuyau selon la revendication 9 ou 10, dans lequel le poids de ladite au moins une couche intérieure (110) représente 75 % à 95 % de la somme des poids de l'au moins une couche intérieure (110) et de la couche de couverture (130) du tuyau, le poids de ladite couche de couverture (130) représentant 25 % à 5 % de la somme des poids de l'au moins une couche intérieure (110) et de la couche de couverture (130) du tuyau.

12. Tuyau selon la revendication 9 ou 10, dans lequel le poids de ladite au moins une couche intérieure (110) représente 80 % à 95 % de la somme des poids de l'au moins une couche intérieure (110) et de la couche de couverture (130) du tuyau, le poids de ladite couche de couverture (130) représentant 20 % à 5 % de la somme des poids de l'au moins une couche intérieure (110) et de la couche de couverture (130) du tuyau.

13. Tuyau selon l'une ou plusieurs des revendications 9 à 12, dans lequel ladite couche de couverture (130) est optiquement transparente, de sorte que les fils (121) de l'au moins une couche de renforcement (120) et les portions découvertes (111) de la surface extérieure de l'au moins une couche intérieure (110) soient visibles depuis l'extérieur.

14. Tuyau selon l'une quelconque des revendications 9 à 13, dans lequel l'épaisseur (T) de ladite couche de couverture (130) est de 0,08 mm à 0,25 mm, voire de manière préférée de 0,1 mm à 0,2 mm.

15. Ligne de production pour fabriquer en continu un tuyau flexible renforcé (100), notamment un tuyau d'arrosage, selon l'une ou plusieurs des revendications 9 à 14, comprenant :
- une station d'extrusion (30) ;
- un appareil d'alimentation (10, 20) pour alimenter en continu ladite station d'extrusion (30) en un tuyau semi-fini (125) incluant au moins une couche intérieure (110) et au moins une couche de renforcement en textile (120) formée par au moins un fil (121) enroulé sur sa surface extérieure de manière à laisser des portions découvertes (111) de la même surface extérieure de ladite au moins une couche intérieure (110) ;
dans laquelle ladite station d'extrusion (30) inclut une matrice d'extrusion (31) ayant un alésage central (34) définissant un axe d'acheminement (X) pour loger le tuyau semi-fini (125) et un canal périphérique (35) ayant au moins un orifice d'entrée (36) pour un matériau polymère thermoplastique à extruder et un orifice de sortie (37) encerclant l'alésage central (34) pour permettre le dépôt du matériau polymère thermoplastique sur le tuyau semi-fini (125) pour former une couche de couverture (130) ;
dans laquelle ladite station d'extrusion (30) inclut une pompe à vide (50) pour mettre ledit alésage central (34) sous vide, de manière à attirer la couche de couverture (130) en contact étroit avec le tuyau semi-fini (125) ;
dans laquelle le canal périphérique (35) inclut une portion tubulaire inclinée (42') et une portion tubulaire sensiblement horizontale (42") en correspondance avec ledit orifice de sortie (37), la portion inclinée (42') étant convergente pour transporter le matériau polymère thermoplastique vers la portion tubulaire sensiblement horizontale (42"), cette dernière ayant une longueur (I) suffisante pour façonner le matériau polymère thermoplastique en un film tubulaire à attirer sur le tuyau semi-fini (125) par le vide, de façon à former la couche de couverture (130) ;
dans laquelle la portion tubulaire sensiblement horizontale (42") dudit canal périphérique (35) est configurée de sorte que l'épaisseur (T) de ladite couche de couverture (130) soit de 0,05 mm à 0,35 mm pour permettre son extrusion continue sans dommage tout en couvrant uniformément à la fois les fils (121) de l'au moins une couche de renforcement (120) et les portions découvertes (111) de la surface extérieure de l'au moins une couche intérieure (110), de manière à ce que le tuyau fini (100) ait une couche de couverture d'épaisseur uniforme (130) tout en ayant un rayon extérieur (R1) en correspondance avec les fils (121) de l'au moins une couche de renforcement (120) qui est supérieur au rayon extérieur minimal (R2) en correspondance avec les portions découvertes (111) de l'au moins une couche intérieure (110) ;
dans laquelle ladite pompe à vide (50) est réglée de manière à ce que la pression absolue dans ledit alésage central (34) ne soit pas inférieure à 250 mmHg afin d'éviter des dommages à la couche de couverture (130).
